# EUROPEAN PATENT APPLICATION

(11) **EP 2 667 018 A2**
(43) Date of publication of application: **27.11.2013**
(21) Application number: 13161636.9
(22) Date of filing: 28.03.2013
(51) Int. Cl.: F03D 1/06

(54) **Wind turbine blade with improved geometry for reinforcing fibers**

(30) Priority: 23.05.2012 US 201213478539
(71) Applicant: Siemens Aktiengesellschaft, 80333 München (DE)
(72) Inventor: Schibsbye, Karsten, 7000 Fredericia (DK)

(57) **Abstract**

A wind turbine blade (10) including: a spar cap (18) having first fibers (38) oriented parallel to a longitudinal axis (40) of the blade (10); and a fiber member (50, 52, 54, 56, 58) joined to the spar cap at a joint (30, 32, 34) and having second fibers (80). The second fibers are oriented at a first angle (α, β) relative to the longitudinal axis along portions remote (100, 130) from the joint and are curved toward the longitudinal axis in a harmonizing region (102, 122, 132) proximate the joint.

## Description

### FIELD OF THE INVENTION

The invention relates to wind turbine blade blades. In particular, the invention relates to an improved arrangement for reinforcing fibers within fiber reinforced blades.

### BACKGROUND OF THE INVENTION

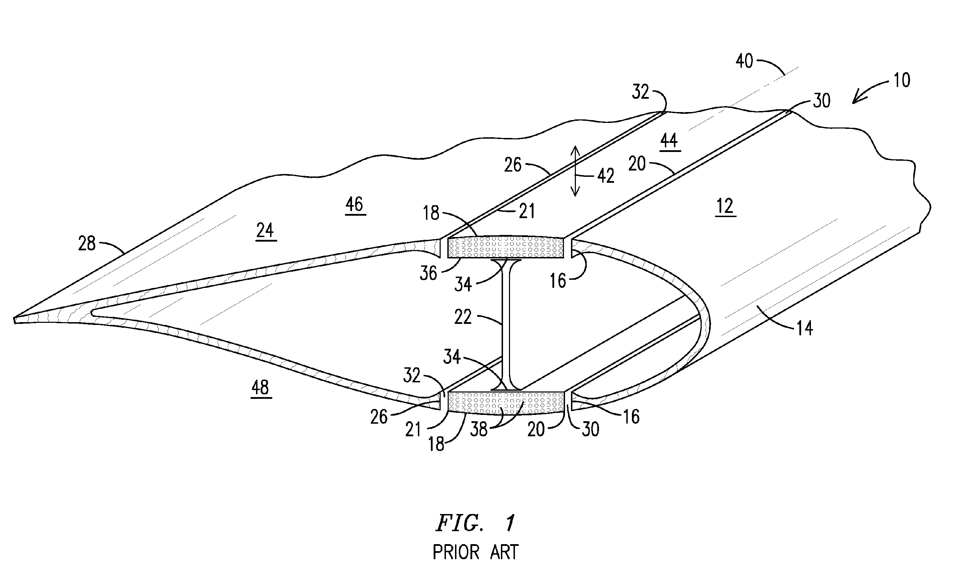

Conventional wind turbine blades are built of a fiber reinforced composite material. The fiber material of the fiber-reinforced composite part may include in particular mineral fibers and polymer fibers. The fiber material may thus include fiber glass, metallic fibers or carbon fibers. Moreover, the fiber material may include all kind of polymer fibers, such as aromatic polyamides, polyethylene, polyurethane or aramide fibers. The fiber material may include different types of fiber materials and may form a composite material. The blades may be formed by covering core components and spar caps with a fiber reinforced matrix composite skin. FIG. 1 shows one type of blade 10 prior to an application of a fiber reinforced matrix. The blade 10 includes a fore section core 12 including a fore section core leading edge 14 and fore section core trailing edges 16; spar caps 18 including a spar cap leading edge 20 and a spar cap trailing edge 21; a web core 22 disposed between and separating the spar caps 18 and an aft section core 24 including an aft section core leading edge 26 and an aft section core trailing edge 28. The fore section core trailing edges 16 abut the spar cap leading edge 20 to form fore section/spar cap joints 30. The aft section core leading edge 26 and the spar cap trailing edge 22 form an aft section/spar cap joints 32. The web core 22 forms web core/spar cap joints 34.

The core components may be made of wood, or foam derived from polyvinylchloride (PVC), polyethylene terephthalate (PET), polyeurethane (PU), or other suitable materials known to those of ordinary skill in the art. The spar caps may be made of fiber reinforced matrix composite material. Visible at the spar cap end 36 are spar cap fibers 38. The spar cap fibers 38 run parallel to a long axis 40 of the spar cap 18 and are oriented this way to be in tension when the blade is flexed in directions 42 normal to a spar cap major surface 44. The web core 22 keeps the spar caps 18 properly positioned during blade flex and the spar caps 18 and associated web skin (not shown) are also expected to transfer force from one spar cap to another during blade flex. Each blade also includes a pressure side 46 and a suction side 48.

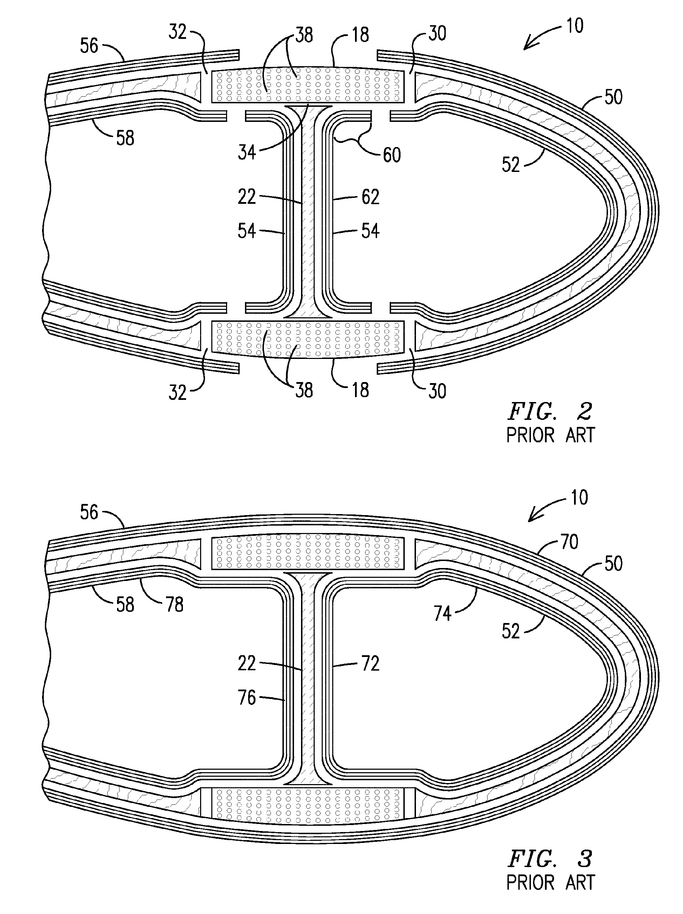

Blade skins may be applied in various ways. FIG. 2 shows a fore section outer airfoil skin 50, a fore section inner airfoil skin 52, web skins 54, an aft section outer airfoil skin 56, and an aft section inner airfoil skin 58. Each skin may include one layer or more than one layer of preformed fiber mats. It can be seen in FIG. 2 that instead of being continuous, the outer, inner, and web skins are discrete. In instances where the skins are discrete the skin may overlap underlying joints to provide sufficient structural stability. For example, the fore section outer airfoil skin 50 and core section inner airfoil skin 52 may overlap the fore section/spar cap joints 30. An amount of overlap may be, for example, three inches or more. Similarly, the aft section outer airfoil skin 56, and the aft section inner airfoil skin 58 may overlap the aft section/spar cap joint 32. In the instance of the web core 22 and the spar caps 18, where the intersecting components are not parallel, when spanning the web core/spar cap joints 34 a transitioning portion 60 of the web skins 54 may transition from an orientation of the web core 22 to an orientation of the respective spar cap 18. For example, a first portion 62 of the web skin 54 may be at a non zero angle with respect to the spar cap 18, while the transitioning portion 60 may transition from the non zero angle to parallel to the spar cap 18.

As shown in FIG. 3, in an alternate configuration the fore section outer airfoil skin 50 and the aft section outer airfoil skin 56 may form a continuous outer airfoil skin 70. Similarly, the fore section inner airfoil skin 52 and a fore web skin 72 may form a continuous combined fore section inner skin 74. Likewise, the aft section inner airfoil skin 58 and a web aft skin 76 may form a continuous combined aft inner skin 78. In such instances it is evident that every joint will be adequately spanned by a covering skin.

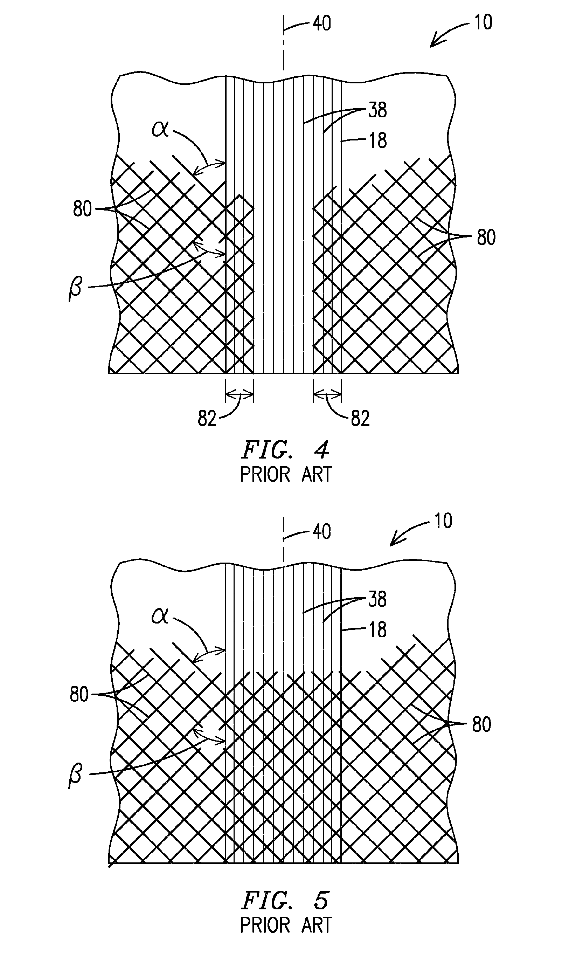

FIG. 4 is a view of either the pressure side 46 or a suction side 48 of a blade 10 having discrete airfoil skin sections as disclosed in FIG 2. The fore section outer airfoil skin 50 and aft section inner airfoil skin 58 typically include outer airfoil skin fibers 80 arranged in a prior art biax pattern, such as a criss cross pattern. The fore section outer airfoil skin 50 and aft section inner airfoil skin 58 may overlap the spar cap 18 to form outer skin/spar cap overlaps 82. These overlaps may be in the range of at least 2-3" long. It can be seen that the spar cap fibers 38 that run parallel to the spar cap long axis 40 form angles α and β with the spar cap fibers 38. FIG. 5 is a view of either the pressure side 46 or a suction side 48 of a blade 10 having a prior art continuous airfoil skin sections as disclosed in FIG 3. The continuous outer airfoil skin 70 and the associated outer airfoil skin fibers 80 completely cover the spar cap 18, yet still form angles α and β with the spar cap fibers 38.

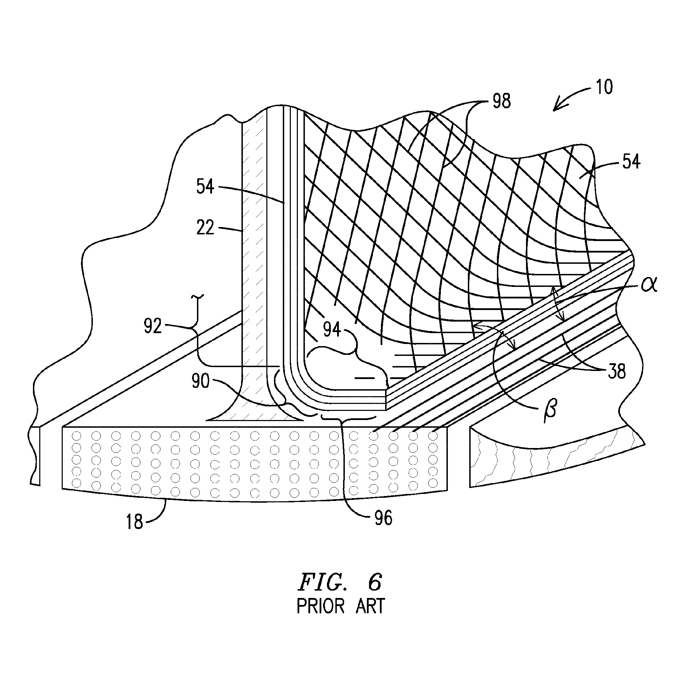

FIG. 6 is a view of a web core 22 and spar cap 18, where the web skins 54 are discrete, as disclosed in FIG. 2. A fillet 90 can be seen where the web core 22 meets the spar cap 18. The web skin 54 includes a first portion 92 that forms an angle with the spar cap 18, and a prior art transitioning portion 94 that transitions the web skin 54 from the first portion 92, across the fillet 90, to being parallel to the spar cap 18. The transitioning portion 94 overlaps the spar cap by a web/spar cap overlap 96. These overlaps may also be in the range of at least 2-3" long. Also visible within the web skin 54 are web fibers 98. It can be seen that within the web/spar cap overlap 96 the web fibers 98 again form angles α and β with the spar cap fibers 38.

In instances where the web skins 54 are part of a continuous fore section inner airfoil skin 74, the continuous inner skins 74, 78 would overlap the fore section/spar cap joints 30 and the aft section/spar cap joints 32 in a manner similar to that shown in FIG. 5 where the continuous outer airfoil skin 70 completely cover the spar cap 18.

### BRIEF DESCRIPTION OF THE DRAWINGS

The invention is explained in the following description in view of the drawings that show:
FIG. 1 is a view of a prior art core section of a turbine blade.
FIG. 2 is a side view of a prior art turbine blade using the core section of FIG. 1, showing inner, outer, and web skins.
FIG. 3 is a side view of a prior art turbine blade using the core section of FIG. 1, showing different inner, outer, and web skins.
FIG. 4 is a side view of a prior art turbine blade using the core section of FIG. 1, showing how discrete prior art skins meet a spar cap.
FIG. 5 is a side view of a prior art turbine using the using the core section of FIG. 1, showing how a continuous prior art airfoil skin spans a spar cap.
FIG. 6 is a perspective view of the turbine blade of FIG. 1, showing a discrete prior art web skin.
FIG. 7 is a side view of the turbine blade and an exemplary embodiment of the fiber geometry disclosed herein when used with discrete skins.
FIG. 8 is a side view of the turbine blade and another exemplary embodiment of the fiber geometry disclosed herein when used with discrete skins.
FIG. 9 is a side view of the turbine blade and another exemplary embodiment of the fiber geometry disclosed herein when used with discrete skins.
FIG. 10 is a side view of the turbine blade and another exemplary embodiment of the fiber geometry disclosed herein when used with a continuous skin.
FIG. 11 is a side view of the turbine blade and another exemplary embodiment of the fiber geometry disclosed herein when used with a continuous skin.
FIG. 12 is a perspective view of the turbine blade and an exemplary embodiment of the fiber geometry disclosed herein when used with a discrete web skin.
FIG. 13 is a side view of a turbine blade and another exemplary embodiment of the fiber geometry disclosed herein.

### DETAILED DESCRIPTION OF THE INVENTION

The reinforcing fibers present within components of wind turbine blades provide reinforcement when in tension to resist blade deflection. The spar caps 18, which are separated by the web core 22 resist blade flex, particularly in directions 42 normal to the pressure side 46 and suction side 48. During this flex the web skins 54 provide structural reinforcement for the web core 22. In addition, the web fibers 98 transfer stress from one spar cap 18 to another during blade flex. However, in web/spar cap overlaps 96, where the spar cap fibers 38 and web fibers 98 are proximate each other they also form angles α and β with each other.

The present inventor has recognized that the angles α and β prevent smooth transition of the force from, for example, the spar cap fibers 38 directly to the web fibers 98. When angles α and β are present the forces transfer from the spar cap fibers 38 and into the matrix material proximate the spar cap fibers 38. The matrix material begins to transfer the force to the web fibers 98 by yielding somewhat, but because the web fibers 98 are at an angle (α and β) to the spar cap fibers 38, and because the web fibers 98 can only offer resistance when in tension, (i.e. fibers only resist force along an axis of the fiber), the web fibers 98 initially only take a portion of the force present in the matrix material. As the resin yields more and the web fibers 98 physically take a relative orientation closer to parallel to the force in the resin, they take more of the force present in the resin. However, while the matrix material is effective to yield a certain amount to transfer force, yielding too much may cause the matrix material to fail. In addition, the matrix material is significantly weaker in tension than the fibers. This force transfer phenomenon occurs proximate where the inner and outer skins overlap the spar caps 18. To accommodate this phenomenon conventional blade design includes thicker joints (a.k.a. interfaces) between abutting fiber reinforced matrix composite components of the blade, which equates to areas adjacent the spar caps 18. This ensures that there exists enough matrix material and fiber to handle the forces. Therefore, conventional blades proximate the spar caps 18, where outer skins, inner skins, and web skins join/interface with the spar caps 18, are relatively heavy and thick.

The present inventor has devised a novel geometry for fibers in components made of fiber reinforced matrix composite materials that provides for improved transfer of force at joints of adjacent and structurally interdependent components. Specifically, the novel geometry calls for the fibers within a first component and proximate a joint to approach being parallel to fibers in the adjacent component that are also proximate the joint. Approaching parallel means fiber ends in a harmonizing region approach an orientation that is more parallel to fibers in the adjacent component proximate the joint. Such a geometry reduces angles (α and β), and thereby increases a transfer of force to the adjacent fibers.

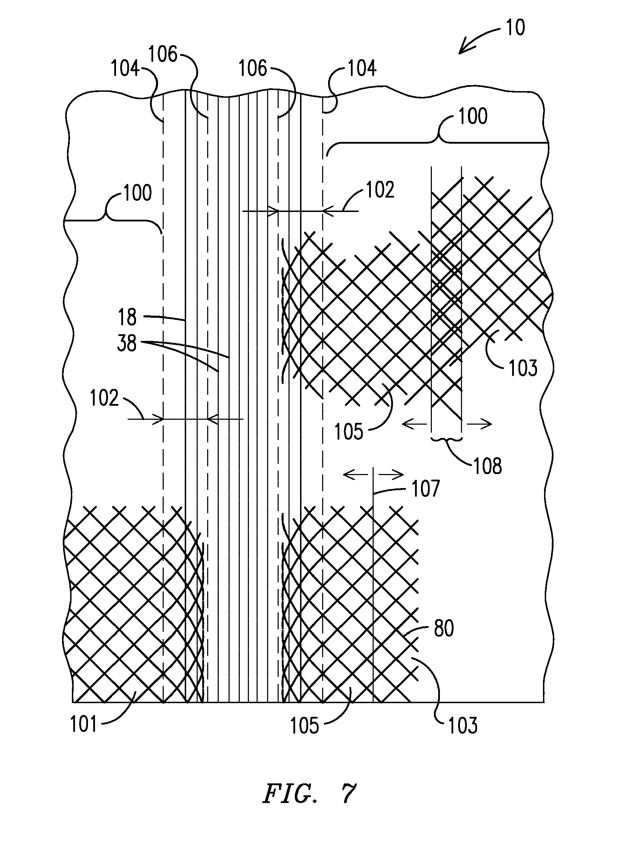

FIG. 7 is a view of either the pressure side 46 or a suction side 48 of a blade 10 having discrete outer airfoil skin sections as disclosed in FIG 2, but incorporating the novel fiber geometry disclosed herein. However, these teachings also apply to the inner skins where they meet the spar caps 18. For sake of clarity only one side is illustrated. It can be seen that in a non harmonizing region 100 the airfoil skin fibers 80 form a first pattern, for example a biax pattern. A skin may include one or more layers of fibers, and if each layer forms a biax pattern, then a skin may include one or more layers of biax fibers. In a harmonizing region 102, which is separated from the non harmonizing region 100 by a harmonizing line 104, the airfoil skin fibers 80 change from their first pattern to an orientation where the ends of the airfoil skin fibers 80 within the harmonizing region curve toward being more parallel to the spar cap fibers 38. The harmonizing region 102 may span the relevant joint, but it need not. Shown is one geometry illustrating a gradual curving of the airfoil skin fibers 80, but other curve rates may be utilized. For example, the harmonizing region 102 may be smaller, which would necessitate a less gradual curve. Likewise, the harmonizing region 102 may be larger and thus a more gradual curve could be employed. An edge 106 of the harmonizing region 102 may be considered an asymptote for the curve of the ends of the airfoil skin fibers 80.

In one exemplary embodiment in order to effect the transition from the non harmonizing region 100 to a harmonizing region 102 a layer of fibers 80 may be formed by a single mat 101 that spans both regions 100, 102 as shown on the left side of FIG. 7. In this instance, within the single mat the fibers 80 may have differing orientations. In another exemplary embodiment in order to effect the transition from the non harmonizing region 100 to a harmonizing region 102, two or more separate mats may be used to complete a single layer. For example, a first mat 103 may be associated primarily with the non harmonizing region 100 and a second mat 105 may be associated primarily with the harmonizing region 102. As shown in the lower right of FIG. 7, the first mat 103 and the second mat 105 may abut each other at a mat abutting line 107. In this case the edges of the first mat 103 and the second mat 105 abut, and so individual fibers 80 abut. As indicated by the arrows associated with the mat abutting line 107, the mat abutting line 107 may be to the right or left of, or centered on the harmonizing line 104. When to the left of the harmonizing line 104, the first mat 103 would have fibers 80 having patterns of both regions 100, 102, while the second mat 105 would have fibers 80 having the pattern of the harmonizing region 102. When to the right of the harmonizing line 104, the second mat would have fibers 80 having patterns of both regions 100, 102, while the first mat would have fibers 80 having the pattern of the non harmonizing region 100. In an exemplary embodiment where the mat abutting line 107 is centered on the harmonizing line 104 the first mat 103 would have fibers 80 of the non harmonizing region pattern, while the second mat 105 would have fibers 80 of the harmonizing pattern as disclosed above. The first mat 103 and the second mat 105 can be any size necessary. In an exemplary embodiment the second mat 105 may be anywhere from approximately five inches long to twelve inches long.

Alternatively, as shown in the upper right of FIG. 7, the ends of the first mat 103 and the second mat 105 may overlap to form a mat overlap 108. This configuration may show improved force transfer from one mat to another due to the overlapping fibers 80. Similar to the mat abutting line 107, the mat overlap 108 may be to the right or left of, or cover the harmonizing line 104, as indicated by the arrows associate with the mat overlap 108. When to the left of the harmonizing line 104, the first mat 103 would have fibers 80 having patterns of both regions 100, 102, while the second mat 105 would have fibers 80 having the pattern of the harmonizing region 102. When to the right of the harmonizing line 104, the second mat 105 would have fibers 80 having patterns of both regions 100, 102, while the first mat 103 would have fibers 80 having the pattern of the non harmonizing region 100. In the exemplary embodiment where the harmonizing line 104 is within the mat overlap 108 each mat 103, 105 would have fibers of both regions 100, 102.

In a hybrid of exemplary embodiments with discrete skins, the two non harmonizing regions 100 of FIG. 7 could be spanned by a single mat. In this case the above described end configurations are possible for each end of the single mat. Within a span of the single mat the fibers 80 could be configured to have as many curves and asymptotes as desired. Such an exemplary embodiment would simplify manufacturing by reducing from two to one the number of mats needed for one spar cap 18.

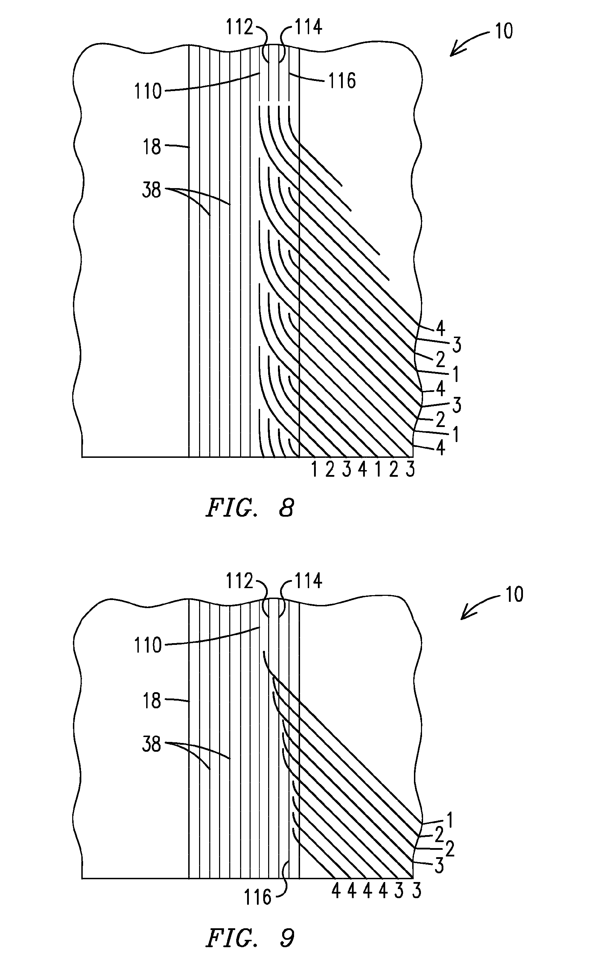

The airfoil skin fibers 80 in the harmonizing region 102 of FIG. 7 each curve toward the edge 106 of the harmonizing region 102. However, individual airfoil skin fibers 80 may have differing paths within the harmonizing region 102. Varying patterns within the harmonizing region 102 may be used as necessary to provide optimized local force transfer characteristics. For example, FIG. 8 shows a variation of the harmonizing region 102 of FIG. 7, where various airfoil skin fibers 80 curve toward differing asymptotes. For clarity only one axis of the biax layer is shown, though in practice both axes would be present, such that the fibers with one axis help hold the fibers of the other axis in place. Airfoil skin fibers 80 of group 1 may use the edge 106 of the harmonizing region 102 as their asymptote 110. Airfoil skin fibers 80 of group 2 may approach a second asymptote 112. Airfoil skin fibers 80 of group 3 may approach a third asymptote 114, and airfoil skin fibers 80 of group 4 may approach a fourth asymptote 116. Four asymptotes have been used for illustration here, but any number of asymptotes is possible. It can be seen that the groups 1, 2, 3, 4, may be patterned in any way. As shown in FIG. 8, there is a repeating pattern of 1, 2, 3, 4, 1, 2, 3, 4, etc. A variation could be 1, 1, 2, 2, 3, 3, 4, 4, 1, 1, 2, 2, 3, 3, 4, 4, etc, or any number of each group.

It can be seen in this pattern that ends (within the harmonizing region 102) of fibers of group 4 are shorter than are ends of fibers of group 1. Further, the ends of fibers of group 4 may not curve to the same degree or length as the ends of fibers of group 1. Consequently, the group 1 fibers may be more efficient at transferring load from the spar caps 18 to the skin. For this reason the pattern may be varied such that groups with shorter ends in the harmonizing region 102 are present with greater number within the pattern. An example of this is illustrated in FIG. 9, where the pattern includes 4, 4, 4, 4, 3, 3, 3, 2, 2, 1, which may repeat. Thus, the ends of group 4, which may be less efficient than the ends of group 1, make up for any inefficiency by larger numbers. Any number of asymptotes, any number of groups, and any pattern of groupings may be envisioned to optimize force transfer.

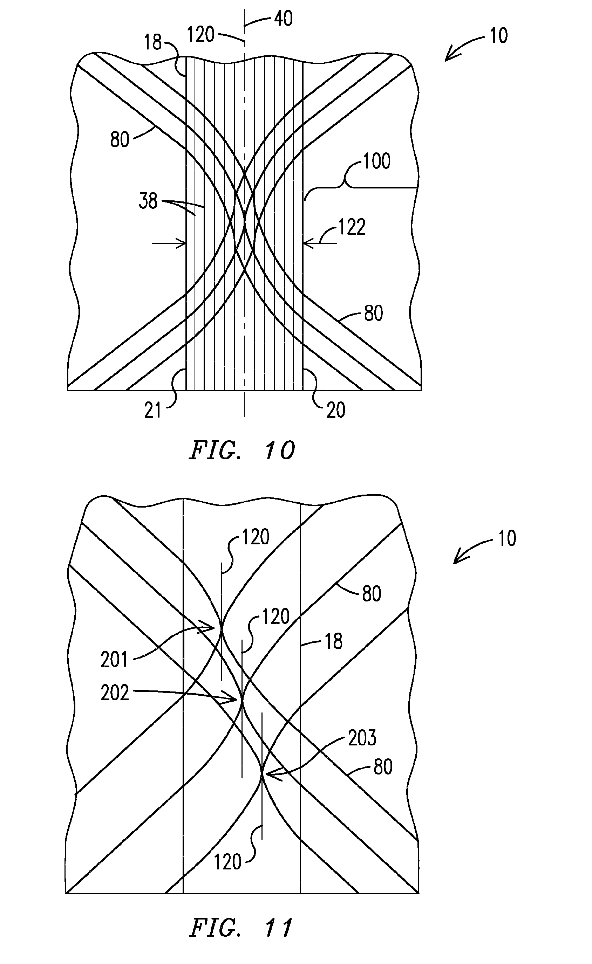

FIG. 10 is a view of either the pressure side 46 or a suction side 48 of a blade 10 having a continuous outer airfoil skin as disclosed in FIG 3, but incorporating the novel fiber geometry disclosed herein. For sake of clarity only a portion of the airfoil skin fibers 80 are illustrated. In this exemplary embodiment, since the airfoil skin fibers 80 span the spar cap 18, there may not be an asymptote. In such case on one side of the spar cap, such as proximate the leading edge 20 of the spar cap 18, the airfoil skin fibers 80 may curve as in FIGS 7-9 but instead of reaching an end point the airfoil skin fibers 80 may continue and blend with airfoil skin fibers 80 proximate the trailing edge 21 of the spar cap 18. This may form a harmonizing region 122. The harmonization region 122 may be wider than and encompass the spar cap 18, but it need not. A line of symmetry 120 may coincide with the longitudinal axis 40 of the spar caps 18. However, as with the patterns of FIGS 7-9, the line of symmetry 120 may vary within the spar cap 18. For example, the line of symmetry for a first group of fibers may be at a different location with respect to the longitudinal axis 40 than a line of symmetry for a second group of fibers. As with FIGS. 7-9, there may be many different lines of symmetry for many different fiber groups, and the fiber groups and lines of symmetry may be patterned as desired to improve localized force transfer between the components. It is also possible for hybrid exemplary embodiments to combine layers of discrete outer airfoil skin sections with layers with a continuous outer airfoil skin in any manner consistent with the novel geometry disclosed herein.

FIG. 11 is a variation of the configuration of FIG. 10, where there exist several lines of symmetry 120 such that groups 201, 202, and 203 of airfoil skin fibers 80 may form symmetric patterns about respective lines of symmetry 120, and where the lines of symmetry 120 may be disposed at various locations. As with the teachings of FIGS. 8 and 9, this will afford greater control over local force transfer characteristics.

The teachings of FIGS. 7-9 also apply to the inner skins where they meet the spar caps 18 or any joint where, at the joints, the components are essentially parallel and the skins is discrete. The teachings of FIGS 10-11 also apply to any components where components are essentially parallel, and one component can span the other component.

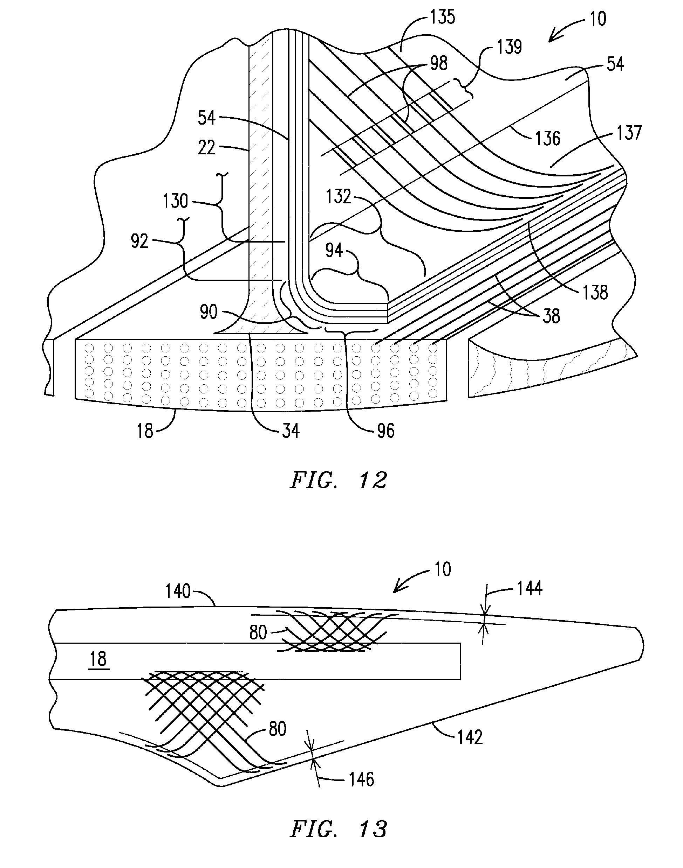

FIG. 12 shows a web core 22 where it meets with a spar cap 18 at a web core/spar cap joint 34, where a discrete web skin 54 spans from the web core 22 to the spar cap 18 across the fillet 90. For sake of clarity only one axis of a biax pattern is shown. The web skin 54 includes a first portion 92 that forms an angle with the spar cap 18, and a transitioning portion 94 that transitions the web skin 54 from the first portion 92, across the fillet 90, to being parallel to the spar cap 18, to form an overlap 96. The novel geometry for the web fibers 98 includes a non harmonizing region 130 and a harmonizing region 132. It can be seen that in a non harmonizing region 130 the web fibers 98 form a first pattern, for example a biax pattern. In a harmonizing region 132, which is separated from the non harmonizing region 130 by a harmonizing line 136, the web fibers 98 change from their first pattern to an orientation where the ends of the web fibers 98 within the harmonizing region curve toward being more parallel to the spar cap fibers 38. The harmonizing region 132 may span the relevant joint, but it need not. The harmonizing line 136 may extend into the first portion 92 by any desired amount. Shown is one geometry showing a gradual curving of the web fibers 98, but other curve rates may be utilized. For example, the harmonizing region 132 may be smaller, which would necessitate a less gradual curve. Likewise, the harmonizing region 132 may be larger and thus a more gradual curve could be employed. An edge 138 of the harmonizing region 102 may be considered an asymptote for the curve of the ends of the web fibers 98. Further, web fibers 98 within the overlap 96 may take any pattern such as, but not limited to those described in FIGS 7-9. Similar to the exemplary embodiment shown in FIG. 7, in order to effect the transition from the non harmonizing region 130 to a harmonizing region 132 a layer of fibers 80 may be formed by a single mat that spans both regions 130, 132. In this instance, within the single mat the fibers 80 may have differing orientations. In another exemplary embodiment in order to effect the transition from the non harmonizing region 130 to a harmonizing region 132, two or more separate mats may be used to complete a single layer. A first mat 135 and a second mat 137 may abut each other at a mat abutting line. Alternatively, the ends of the first mat 135 and the second mat 137 may overlap to form a mat overlap 139. The above described web fiber geometry for the web core/spar cap joint 34 applies to embodiments with discrete inner skins and continuous inner skins since both cover the web core/spar cap joint 34.

As shown in FIG. 13, the novel geometry may also be applied to a leading edge 140 and/or trailing edge 142 of the blade 10 itself. For example, the airfoil skin fibers 80 may form a leading edge harmonizing region 144 in which the ends of the airfoil skin fibers 80 approach being parallel to a respective portion of the leading edge 140 proximate the respective airfoil skin fiber ends. Likewise, the airfoil skin fibers 80 may form a trailing edge harmonizing region 146 in which ends of the airfoil skin fibers 80 approach being parallel to a respective potion of the trailing edge 144 proximate the respective airfoil skin fiber ends. Such a configuration would improve strength near the edges of the blade where the blade halves are joined because all airfoil skin fibers 80 proximate a seam between the blade halves would be nearly parallel to each other.

The novel geometry for reinforcing fibers within reinforced composite materials being joined provides increased strength, and therefore blades may be designed using less material to accommodate a same load. Decreased material yields a decrease in manufacturing costs, and decreased weight yields more efficient operation. Consequently, the disclosure herein represents an improvement in the art.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A wind turbine blade comprising:
a spar cap comprising first fibers oriented parallel to a longitudinal axis of the blade; and
a fiber member joined to the spar cap at a joint and comprising second fibers;
wherein the second fibers are oriented at a first angle relative to the longitudinal axis along portions remote from the joint and are curved toward the longitudinal axis in a harmonizing region proximate the joint.

2. The wind turbine of claim 1, wherein at least a portion of the second fibers are oriented parallel to the longitudinal axis within the harmonizing region.

3. The wind turbine of claim 1, wherein the fiber member comprises an edge proximate the spar cap, and further comprising ends of the second fibers disposed proximate the edge being generally parallel to the longitudinal axis.

4. The wind turbine of claim 1, wherein the fiber member overlaps the spar cap, and further comprising portions of the second fibers within the harmonizing region being oriented parallel to the longitudinal axis.

5. The wind turbine of claim 1, wherein a first mat comprises the curving second fibers and a second, different mat comprises the second fibers at the first angle.

6. A wind turbine blade, comprising:
a first member comprising first fibers;
a second member comprising second fibers; and
an interface between the first member and the second member;
wherein the first fibers reorient from an orientation that is not parallel with the second fibers remote from the interface toward being more parallel with the second fibers proximate the interface.

7. The wind turbine blade of claim 6, wherein the second member is a spar cap, wherein the second fibers are disposed parallel to a long axis of the spar cap, wherein the first member is a discrete airfoil skin, and wherein the discrete airfoil skin comprises a harmonizing region adjacent the spar cap where the first fibers reorient toward being more parallel with the second fibers.

8. The wind turbine blade of claim 7, wherein within the harmonizing region the first fibers curve toward an asymptote.

9. The wind turbine blade of claim 8, wherein the asymptote is an edge of the discrete skin.

10. The wind turbine blade of claim 8, comprising a plurality of asymptotes and a plurality of fiber groups, wherein within the harmonizing region the fiber groups curve toward respective asymptotes.

11. The wind turbine blade of claim 6, wherein the second member is a spar cap, wherein the second fibers are disposed parallel to a long axis of the spar cap, wherein the first member is a continuous airfoil skin spanning a full width of the spar cap, and wherein the continuous airfoil skin comprises a harmonizing region adjacent the spar cap where the first fibers reorient toward being more parallel with the second fibers.

12. The wind turbine blade of claim 11, wherein the first fibers form a symmetric pattern about a line of symmetry disposed within the harmonizing region and parallel to the long axis of the spar cap.

13. The wind turbine blade of claim 12, wherein groups of first fibers form symmetric patterns around a plurality of respective lines of symmetry disposed at different locations.

14. The wind turbine blade of claim 6, wherein the second member is a spar cap, wherein the second fibers are disposed parallel to a long axis of the spar cap, wherein the first member is a web skin, and wherein the web skin comprises a harmonizing region adjacent the spar cap where the first fibers reorient toward being more parallel with the second fibers.

15. The wind turbine blade of claim 13, wherein within the harmonizing region the first fibers curve toward an asymptote.

16. The wind turbine blade of claim 13, comprising a plurality of asymptotes and a plurality of fiber groups, wherein within the harmonizing region the fiber groups curve toward respective asymptotes.

17. The wind turbine blade of claim 13, wherein the web skin comprises a first portion at an angle with the spar cap and a transition portion that spans from the first portion to being parallel to the spar cap.

18. The wind turbine blade of claim 14, wherein the transition forms an overlap on the spar cap and the harmonizing region comprises at least the overlap.

19. The wind turbine blade of claim 14, comprising a continuous combined inner skin comprising the web skin and an inner airfoil skin, wherein the continuous combined inner skin covers an entire inner circumference of the blade.

20. The wind turbine blade of claim 6, wherein the first member comprises a plurality of layers of first fibers and a plurality of layers of second fibers.
